# NEW EUROPEAN PATENT SPECIFICATION

(11) **EP 1 179 894 B2**
(45) Date of publication and mention of the opposition decision: **15.01.2020**
(45) Mention of the grant of the patent: 24.02.2010
(21) Application number: 00117043.0
(22) Date of filing: 09.08.2000
(51) Int. Cl.: H04B 7/08, H01Q 3/36

(54) **Front end for a mobile communication device**
Frontend für ein mobiles Kommunikationsgerät
Unité frontale pour un appareil de communication mobile

(43) Date of publication of application: 13.02.2002
(60) Divisional application: 10154412.0
(73) Proprietor: IPCom GmbH & Co. KG, 82049 Pullach (DE)
(72) Inventor: Knudsen, Mikael B., 9260 Gistrup (DK); Pedersen, Gert Frolund, 9280 Storvorde (DK)
(74) Representative: Molnia, David

(56) References cited:
- WO-A-96/08850
- WO-A2-96/08850
- DE-A- 4 321 805
- DE-A1- 4 321 805
- US-A- 3 295 138
- US-A- 5 280 637
- US-A- 5 504 745
- Carl David Todd: "The Potentiometer Handbook", 1975, McGraw-Hill, New York pages VII-XV, 1-14-102-112,

## Description

The present invention relates to a mobile communication device.

EP1 014 480 A2 discloses a receiver which directs the center of the main beam of the antenna directivity response in a desired direction by passing signals received by the n antenna elements through a phase shifter. An output from the phase shifter is passed through a receiving filter and is then amplified by a low noise amplifier to be delivered as an output.

US 5,280,637 discloses a phase combining method and apparatus for use in a diversity reception radiotelephone. The phase combining method and apparatus is a hybrid diversity technique which- combines elements of maximal ratio combining (MRC) and level comparison selection diversity, which results in a simple and effective implementation of a diversity receiver. The diversity receiver demodulates the received signals, extracts the phase, forming two phase signals. Then, the two phase signals are combined to form a third phase signal. One of the three phase signals is selected to be used for interpretation of a symbol in the Quadrature Phase Shift Keying (QPSK) constellation. The selection process is based on the received signal strength of the received signals.

It is an object of the present invention to improve a mobile communication device.

The object is achieved by a mobile communication device comprising a front end according to claim 1. The front end comprising at least two inputs, a first input and a second input, and a phase shifter capable of shifting the phase of a first signal traveling through the phase shifter from the first input to the second input by a predetermined phase shift and capable of shifting the phase of a second signal travelling through the phase shifter from the second input to the first input.

According to the invention the front end comprises a selector for selecting an output signal between the first input and the second input.

According to the invention the selector is capable of selecting the output signal such that the output signal is the sum of the first signal being delayed by a phase shift between 0 and the predetermined phase shift and the second signal being delayed by a phase shift between the predetermined phase shift and 0.

In a preferred embodiment of the invention the phase shifter comprises a transmission line.

In a further preferred embodiment of the invention the front end is implemented as an integrated circuit.

In a further preferred embodiment of the invention the phase shifter comprises at least two, in particular three, phase shifting units.

In a further preferred embodiment of the invention a phase shifting unit provides for a phase shift between 10° and 90°, in particular for a phase shift of 45° or 90°.

In a further preferred embodiment of the invention at least one phase shift unit comprises at least one inductive element and at least one capacitor.

In a further preferred embodiment of the invention the inductive element and the capacitor are dimensioned such that they can be implemented in an integrated circuit.

According to the invention the mobile communication device comprises at least two antennas, a first antenna and a second antenna.

According to the invention the first antenna is connected to the first input of the front end.

According to the invention the second antenna is connected to the second input of the front end.

In a further preferred embodiment of the invention the mobile communication device is a cell phone or a mobile computer, in particular according to GSM or UMTS standard.

In a further preferred embodiment of the invention the mobile communication device is a CDMA mobile system with a rake receiver disclosed, e.g. in Price, R. et al., "A Communication Technique for Multipath Channels," Proceedings of the IRE, 1958, vol. 46, pp. 555-570.

Further preferred embodiments, and advantages of the present invention will become apparent from the claims and the description below, based on the drawings, in which:
- FIG. 1: shows a mobile communication device,
- FIG. 2: shows a receiver arrangement,
- FIG. 3: shows a front end,
- FIG. 4: shows a phase shifting element, and
- FIG. 5: shows a phase shifter.

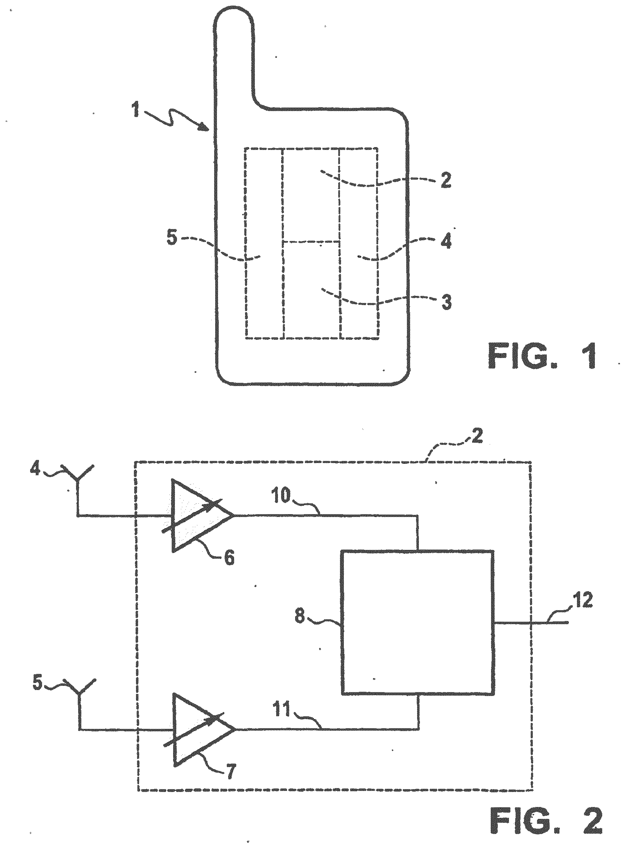

FIG. 1 shows a mobile communication device 1. The mobile communication device 1 is in the present embodiment a mobile phone for a European Telecommunications Standard Institute system or Universal Mobile Telecommunications system, an Association of radio Industries and Businesses Wideband Code Division Multiple Access communications system, and/or a Wideband Code Division Multiple Access system being defined by 3^{rd} Generation Partnership Project communications system.

The mobile communication device 1 may be a multi-mode mobile station, capable of operating, for example in a Global System for Mobile Telecommunications (GSM) system as well as a UMTS system.

The mobile communication device 1 comprises the receiver arrangement 2, processing means 3, a first antenna 4, and a second antenna 5 . The receiver arrangement 2 receives signals from a base station (not shown) by means of the first antenna 4 and the second antenna 5. The processing means 3, among many other tasks, process signals received from the receiver arrangement 2. The mobile communication device 1 may further comprise additional circuitry, filter means, processing means, storage means, man machine interfaces and so on.

FIG. 2 shows the first antenna 4 and the second antenna 5 as well as the receiver arrangement 2 in more detail. The receiver arrangement 2 comprises a first amplifier 6 and a second amplifier 7. The amplifiers 6 and 7 are preferably tunable. The output of the first amplifier is connected to a first input 10 of a front end 8. The output of second amplifier 7 is connected to a second input 11 of the front end 8. Reference number 12 denotes an output of the front end 8.

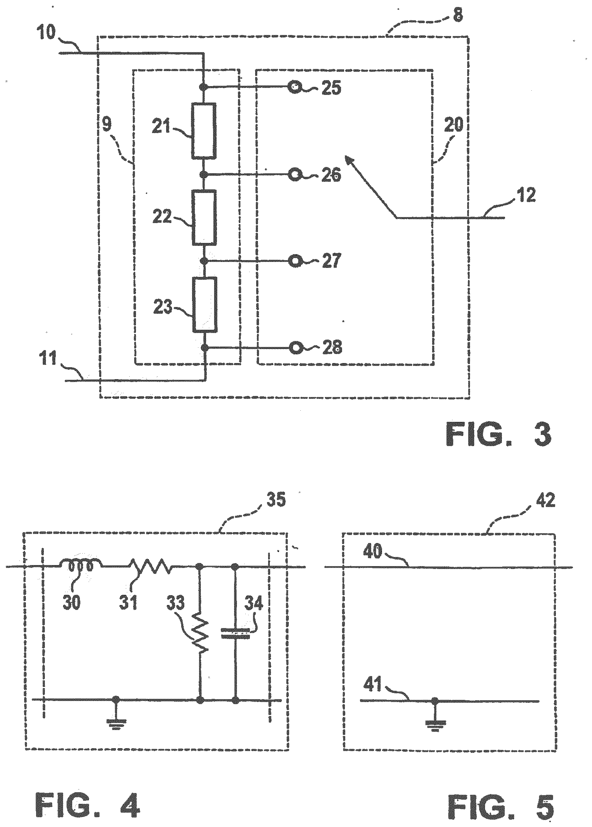

FIG. 3 shows the front end 8 in more detail. The front end 8 comprises the phase shifter 9 between the first input 10 and the second input 11 capable of shifting the phase of a first signal traveling through the phase shifter 9 from the first input 10 to the second input 11 by a predetermined phase shift and capable of shifting the phase of a second signal traveling through the phase shifter 9 from the second input 11 to the first input 10 by the predetermined phase shift. In the shown embodiment the predetermined phase shift is 270°.

The phase shifter 9 comprises in the current example three phase shifting elements 21, 22 and 23. Each of these phase shifting elements 21, 22 and 23 provides for a phase shift of 90°. The phase shifter 9 provides at a first point 25 a signal being the sum of the first signal and the second signal being delayed by 270°. The phase shifter 9 provides at a second point 26 a signal being the sum of the first signal being delayed by 90° and the second signal being delayed by 180°. The phase shifter 9 provides at a third point 27 a signal being the sum of the first signal being delayed by 180° and the second signal being delayed by 90°. The phase shifter 9 provides at a fourth point 28 a signal being the sum of the first signal being delayed by 270° and the second signal.

The front end 8 further comprises the selector 20 for selecting a signal of one of the points 25, 26, 27 or 28 and for providing it as an output signal at the output 12.

FIG. 4 shows a preferred embodiment of a phase shifting element 35 which can be used as phase shifting element 21, 22 and/or 23. The phase shifting element 35 comprises an inductive element 30, two resistors 31 and 33, and a capacitor 34. The ratio of the inductivity of the inductive element 30 and the capacitance of the capacitor 34 is preferably in the vicinity of 2,5.

FIG. 5 shows a phase shifter 42 which can be used as an embodiment of the phase shifter 9 or a phase shifting element 21, 22 and/or 23. The phase shifter 42 comprises a transmission line 40 and a second line 41.

Phase shifters 9 and 42 and phase shifting element 35 are preferably implemented in an integrated circuit.

The receiver arrangement 2 in particular the front end 8 as well as the first antenna 4 and the second antenna 5 are designed to operate approximately in the frequency range of 1 through 2 GHz. They are in particular designed to operate in a frequency range of one, more, or all of the following frequency bands:

| | |
|---|---|
| GSM-900: | 925-960 MHz |
| GSM1800: | 1805-1880 MHz |
| GSM1900: | 1930-1990 MHz |
| UMTS FDD: | 2110-2170 MHz |
| UMTS TDD: | 2010-2025 MHz |

## Claims

1. Mobile communication device (1) comprising a front end (8), whereby the front end (8) comprises
at least two inputs, a first input (10) and a second input (11),
a phase shifter (9, 42) capable of shifting the phase of a first signal traveling through the phase shifter (9, 42) from the first input (10) to the second input (11) by a predetermined phase shift and capable of shifting the phase of a second signal traveling through the phase shifter (9, 42) from the second input (11) to the first input (10) and
a selector (20) for selecting an output signal between the first input (10) and the second input (11),
**characterized in that**
the selector (20) is capable of selecting the output signal such that the output signal is the sum of the first signal being delayed by a phase shift between 0 and the predetermined phase shift and the second signal being delayed by a phase shift between the predetermined phase shift and 0,
whereby the mobile communication device comprises at least two antennas, a first antenna (4) and a second antenna (5), whereby the first antenna (4) is connected to the first input (10) of the front end, and whereby the second antenna (5) is connected to the second input (11) of the front end.

## Patentansprüche

1. Mobiles Kommunikationsgerät (1) umfassend ein Frontend (8) mit mindestens zwei Eingängen, einem ersten Eingang (10) und einem zweiten Eingang (11), einem Phasenschieber (9, 42), der die Phase eines den Phasenschieber (9, 42) vom ersten Eingang (10) zum zweiten Eingang (11) durchlaufenden ersten Signals um eine vorbestimmte Phasenverschiebung und die Phase eines den Phasenschieber (9, 42) vom zweiten Eingang (11) zum ersten Eingang (10) durchlaufenden zweiten Signals verschieben kann, und einem Wähler (20) zum Auswählen eines Ausgangssignals zwischen dem ersten Eingang (10) und dem zweiten Eingang (11), **dadurch gekennzeichnet, dass** der Wähler (20) das Ausgangssignal so auswählen kann, dass das Ausgangssignal die Summe des um eine Phasenverschiebung zwischen 0 und der vorbestimmten Phasenverschiebung verzögerten ersten Signals und des um eine Phasenverschiebung zwischen der vorbestimmten Phasenverschiebung und 0 verzögerten zweiten Signals ist,
wobei das mobile Kommunikationsgerät mindestens zwei Antennen umfasst, eine erste Antenne (4) und eine zweite Antenne (5),
wobei die erste Antenne (4) mit dem ersten Eingang (10) des Frontends verbunden ist, und
wobei die zweite Antenne (5) mit dem zweiten Eingang (11) des Frontends verbunden ist.

## Revendications

1. Dispositif de communication mobile (1) comprenant une étage d'entrée (8) par lequel l'étage d'entrée (8) comprenant au moins deux entrées, une première entrée (10) et une deuxième entrée (11), un déphaseur (9, 42) qui peut décaler la phase d'un premier signal se propageant à travers le déphaseur (9, 42) de la première entrée (10) vers la deuxième entrée (11) d'un niveau de déphasage prédéterminé et qui peut décaler la phase d'un deuxième signal se propageant à travers le déphaseur (9, 42) de la deuxième entrée (11) vers la première entrée (10) et un sélecteur (20) pour sélectionner un signal de sortie entre la première entrée (10) et la deuxième entrée (11), **caractérisé en ce que** le sélecteur (20) est capable de sélectionner le signal de sortie de telle sorte que le signal de sortie est égal à la somme du premier signal retardé d'un déphasage compris entre 0 et le déphasage prédéterminé et du deuxième signal retardé d'un déphasage compris entre le déphasage prédéterminé et 0,
celui-ci le dispositif de communication mobile comprenant au moins deux antennes, une première antenne (4) et une deuxième antenne (5), la première antenne (4) étant connectée à la première entrée (10) de l'étage d'entrée, et la deuxième antenne (5) étant connectée à la deuxième entrée (11) de l'étage d'entrée.
